# EUROPEAN PATENT APPLICATION

(11) **EP 2 786 722 A1**
(43) Date of publication of application: **08.10.2014**
(21) Application number: 14020025.4
(22) Date of filing: 07.03.2014
(51) Int. Cl.: A61C 9/00, A61C 13/08

(54) **Color 3-D image capture with monochrome image sensor**

(30) Priority: 08.03.2013 US 201313789708
(71) Applicant: Carestream Health, Inc., Rochester NY 14608-1733 (US)
(72) Inventor: Wong, Victor C., Rochester, NY 14623 (US); Song, Liwei, Shanghai (CN); Apte, Pushkar, San Jose, California 95136 (US)
(74) Representative: Wimmer, Hubert

(57) **Abstract**

A method for forming a color surface contour image of one or more teeth projects each of a plurality of structured patterns onto the one or more teeth and records image data from the structured pattern onto a monochrome sensor array. Surface contour image data is generated according to the recorded image data from the structured pattern projection. Light of first, second, and third spectral bands is projected onto the one or more teeth and first, second, and third color component image data is recorded on the monochrome sensor array. The first, second, and third color component image data is combined with color calibration data to generate a set of color values for each image pixel. The generated set of color values is assigned to the corresponding pixel in the generated surface contour image data to generate the color surface contour image. The generated color surface contour image is displayed.

## Description

### FIELD OF THE INVENTION

The invention relates generally to the field of surface shape imaging and more particularly relates to surface imaging and display of 3-D color images in intraoral applications.

### BACKGROUND OF THE INVENTION

Surface contour information can be particularly useful for assessment of tooth condition and is helpful for various types of dental procedures, such as for restorative dentistry. A number of techniques have been developed for obtaining surface contour information from various types of objects in medical, industrial, and other applications. Optical 3-dimensional (3-D) measurement methods provide shape and depth information using light directed onto a surface in various ways. Among types of imaging methods used for contour imaging are those that generate a series of light patterns and use focus or triangulation to detect changes in surface shape over the illuminated area.

Fringe projection imaging uses patterned or structured light and triangulation to obtain surface contour information for structures of various types. In fringe projection imaging, a pattern of lines is projected toward the surface of an object from a given angle. The projected pattern from the surface is then viewed from another angle as a contour image, taking advantage of triangulation in order to analyze surface information based on the appearance of contour lines. Phase shifting, in which the projected pattern is incrementally shifted spatially for obtaining additional measurements at the new locations, is typically applied as part of fringe projection imaging, used in order to complete the contour mapping of the surface and to increase overall resolution in the contour image.

Fringe projection imaging has been used effectively for surface contour imaging of solid, highly opaque objects and has been used for imaging the surface contours for some portions of the human body and for obtaining detailed data about skin structure. However, a number of technical obstacles have made it difficult to use fringe projection imaging of the tooth. Variable factors related to tooth translucency, reflection from tooth surfaces under various conditions, peculiarities of tooth shape, and other characteristics make it challenging to obtain accurate volume or three-dimensional (3-D) imaging information from the teeth.

One notable shortcoming of conventional techniques for 3-D tooth imaging relates to the lack of accurate color information. Fringe projection techniques typically use monochrome light or, if white light is used, ignore color content and provide and process only binary (black/white) information from the detected pattern. Polychromatic light is generally not preferred for contour imaging, particularly for teeth and other complex structures.

For aesthetic as well as diagnostic purposes, it can be appreciated that there would be value in providing 3-D surface contour images in color. Known approaches to this problem, however, fall short of what is needed for providing color volume images. One proposed solution, as described, for example, in patent disclosure EP 0837659 entitled "Process and Device for Computer-Assisted Restoration of Teeth" to Franetzki, obtains color data in a conventional manner using a color detector and then superimposes the 2-D Red (R), Green (G), and Blue (B) or RGB color image onto the 3-D volume image when it is displayed. This type of simulated color solution, however, does not provide true 3-D color image data. Simultaneously displayed and superimposed color content as described in EP 0837659, provided that it can be correctly scaled and registered to the volume image data when overlaid onto the 3-D surface image, would be accurate at a single viewing angle only. Any other view of the 3-D surface would not have the superimposed color image content.

Color sensor arrays are more costly and complex than monochrome sensor arrays. In addition, sensor arrays that generate RGB data directly are inherently less efficient and less sensitive to low light level conditions, such as those common in intra-oral imaging.

Thus, it can be appreciated that there is a need for an image processing method that provides 3-D image data of the teeth having full color content, using a single image capture apparatus that employs a monochrome sensor array.

### SUMMARY OF THE INVENTION

An object of the present invention is to advance the art of surface contour detection of teeth and related intraoral structures. Embodiments of the present invention provide 3-D surface information about a tooth by illuminating the tooth surface with an arrangement of light patterns that help to more closely map pixel locations on a digital imaging array to pixel locations from a monochrome illumination device. With the image capture apparatus held in the same position used for surface imaging, color data is also obtained for each pixel. Processing then provides image pixels for the tooth surface that have both color information and surface depth information.

These objects are given only by way of illustrative example, and such objects may be exemplary of one or more embodiments of the invention. Other desirable objectives and advantages inherently achieved by embodiments of the present invention may occur or become apparent to those skilled in the art. The invention is defined by the appended claims.

According to one aspect of the invention, there is provided a method for forming a color surface contour image of one or more teeth, the method comprising: for each of a plurality of structured patterns, projecting the structured pattern onto the one or more teeth and recording image data from the structured pattern onto a monochrome sensor array; generating surface contour image data according to the recorded image data from the structured pattern projection; projecting light of a first spectral band onto the one or more teeth and recording first color component image data on the monochrome sensor array; projecting light of a second spectral band onto the one or more teeth and recording second color component image data on the monochrome sensor array; projecting light of a third spectral band onto the one or more teeth and recording third color component image data on the monochrome sensor array; combining the recorded first, second, and third color component image data for each image pixel with color calibration data to generate a set of color values for the pixel and assigning the generated set of color values to the corresponding pixel in the generated surface contour image data to generate the color surface contour image; and displaying the generated color surface contour image.

### BRIEF DESCRIPTION OF THE DRAWINGS

The foregoing and other objects, features, and advantages of the invention will be apparent from the following more particular description of the embodiments of the invention, as illustrated in the accompanying drawings. The elements of the drawings are not necessarily to scale relative to each other.
Figure 1 is a schematic diagram showing an imaging apparatus for obtaining color 3-D information from a patient's teeth.
Figure 2 is a schematic diagram that shows projection of a structured pattern onto the surface of a tooth.
Figure 3 is a schematic diagram showing components of a camera for intra-oral imaging that obtains a color surface contour image of a tooth using a monochrome sensor array.
Figure 4A is a schematic diagram that shows how patterned light is used for obtaining surface contour information.
Figure 4B is a plan view of one structured light pattern having multiple lines of light spaced apart from each other.
Figure 5 is a plan view showing projection of a structured light pattern onto a tooth.
Figures 6A, 6B, and 6C show images of teeth obtained on a monochrome image sensor array using light of different spectral bands.
Figure 6D is an image formed using the combined color content acquired for Figures 6A, 6B, and 6C.
Figure 7 is a logic flow diagram that lists the steps for obtaining a color reconstructed surface image according to an embodiment of the present invention.
Figure 8 is a logic flow diagram that shows the steps for obtaining a 2-D color image according to an embodiment of the present invention.
Figure 9 is a schematic diagram that shows an operator interface for display of images obtained using imaging methods consistent with the present invention.

### DETAILED DESCRIPTION OF THE INVENTION

The following is a detailed description of the preferred embodiments of the invention, reference being made to the drawings in which the same reference numerals identify the same elements of structure in each of the several figures. Where they are used, the terms "first", "second", and so on, do not necessarily denote any ordinal, sequential, or priority relation, but are simply used to more clearly distinguish one element or set of elements from another.

In the context of the present disclosure, the terms "spectral band" or "wavelength band" indicate a defined, continuous range of wavelengths for illumination and imaging and are used interchangeably with the term "color". For example, the phrase "red spectral band" is used to indicate visible light that is generally within the red wavelength range from about 620 nm to about 700 nm.

In the context of the present disclosure, the term "color component image", equivalent to data in a single color plane, refers to the image data that is acquired using an image capture with light of a single spectral band. Thus, for example, a conventional full-color RGB image is formed from red, green, and blue components, wherein each individual image is termed a color component image.

An "ordered set" has its conventional meaning as used in set theory, relating to a set whose elements have a non-ambiguous ordering, such as the set of natural numbers that are ordered in an ascending sequence, for example.

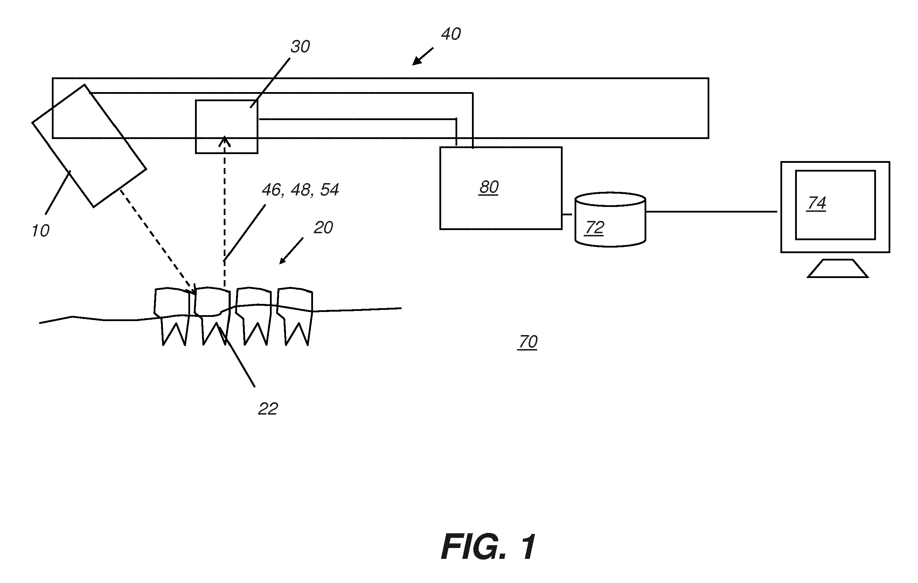

The schematic diagram of Figure 1 shows an imaging apparatus 70 for combined volume and color imaging of the teeth. For volume imaging, a camera 40 projects structured imaging patterns 46 onto surface 20 of teeth 22 to obtain a contour image 48 according to an embodiment of the present invention. A control logic processor 80 or other type of computer controls the operation of an illumination array 10 and acquires digital image data obtained from a monochrome imaging sensor array 30. During volume imaging, illumination array 10 projects patterned light onto an area 54 of the tooth, typically including structured patterns with multiple lines of light having a predetermined spacing between lines. Image data from surface 20 is obtained from the patterned light detected by imaging sensor array 30. Control logic processor 80 processes the received image data and stores the mapping in memory 72. The reconstructed 3-D surface image from memory 72 is then optionally displayed on a display 74. Memory 72 may also include a display buffer.

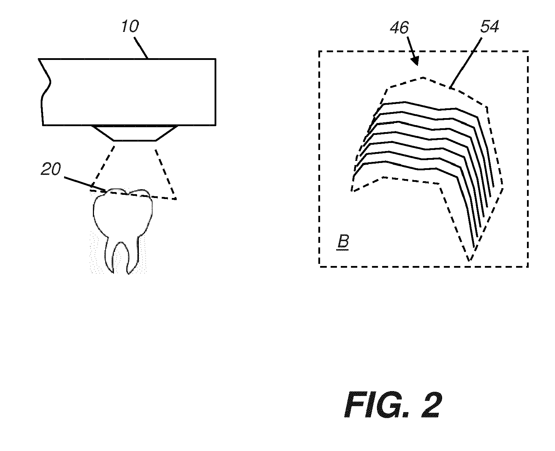

The schematic view of Figure 2 shows, in an inset labeled B, a portion of a typical fringe pattern 46 that is directed onto area 54 of surface 20 from illumination array 10.

For color contour imaging, camera 40 is held in the same position for obtaining color component images as that used for structured light pattern projection and imaging. Illumination array 10 projects light of different color component wavelengths, typically Red (R), Green (G), and Blue (B), one at a time, and captures a separate image on monochrome sensor array 30 at each wavelength band. The captured images are also processed and stored by control logic processor 80 (Figure 1).

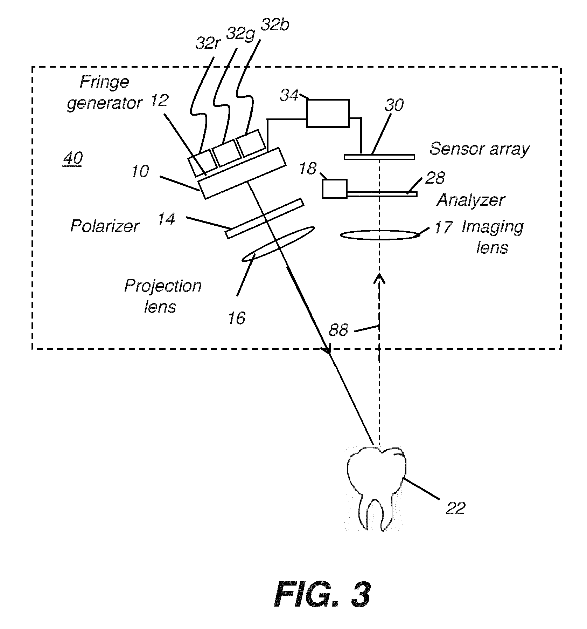

The schematic diagram of Figure 3 shows internal components of camera 40 for obtaining 3-D surface contour and color data according to an embodiment of the present invention. A fringe pattern generator 12 is energizable to form the structured light from illumination array 10 as a type of structured illumination or fringe pattern illumination, and to project the structured light thus formed as incident light toward tooth 22 through an optional polarizer 14 and through a projection lens 16. Light reflected and scattered from tooth 22 is provided to sensor array 30 through an imaging lens 17 and an optional analyzer 28. Sensor array 30 is disposed along a detection path 88, at the image plane of imaging lens 17. A processor 34 in camera 40 accepts image content and other feedback information from sensor array 30 and, in response to this and other data, is actuable to effect the operation of pattern generator 12, as described in more detail subsequently.

One function of processor 34 for fringe projection imaging is to incrementally shift the position of the fringe and trigger the sensor array 30 to take images that are then used to calculate three-dimensional information of the tooth surface. For the phase-shifting fringe projection method, at least three images are typically needed in order to provide enough information for calculating the three-dimensional information of the object. Where only three fringe images are obtained, the relative positions of the fringes for each of these three projected images are typically shifted by one-third of the fringe period. Processor 34 can be a computer, microprocessor, or other dedicated logic processing apparatus that executes programmed instructions and is in communication with control logic processor 80 that provides imaging system functions as described previously with respect to Figure 1.

Intra-oral camera 40 of Figure 3 optionally uses polarized light for surface contour imaging of tooth 22. Polarizer 14 provides the fringe pattern illumination from fringe pattern generator 12 as linearly polarized light. In one embodiment, the transmission axis of analyzer 28 is parallel to the transmission axis of polarizer 14. With this arrangement, only light with the same polarization as the fringe pattern is provided to the sensor array 30. In another embodiment, analyzer 28, in the path of reflected light to sensor array 30, is rotated by an actuator 18 into either of two orientations as needed:
(a) Same polarization transmission axis as polarizer 14. In this "co-polarization" position, sensor array 30 obtains the specular light reflected from the surface of tooth 22, and most of the light scattered and reflected from the superficial layer of enamel surface of tooth 22, as well as some of the light scattered back from sub-surface portions of the tooth. Parallel or co-polarization provides improved contrast over other configurations.
(b) Orthogonal polarization transmission axis relative to polarizer 14. Using the orthogonal polarization, or cross-polarization, helps to reduce the specular component from the tooth surface and obtain more of the scattered light from inner portions of the tooth.

When the tooth is imaged with an imaging system and sensor array 30, the light that is available to the sensor array can be (i) light reflected from the tooth top surface; (ii) light scattered or reflected from the near surface volume or portion of the tooth; and (iii) light scattered inside the tooth. In the context of the present disclosure, the "near-surface volume" of the tooth is that portion of the tooth structure that lies within no more than a few hundred µm of the surface.

Also shown in Figure 3 is a red light source 32r, a green light source 32g, and a blue light source 32b for providing color light for color imaging. Each of these light sources can consist of a single light emitting element, such as a light-emitting diode (LED) or of multiple light emitting elements. In the embodiment shown, the illumination path for structured pattern light from the fringe generator and the RGB light is the same; the detection path of light toward sensor array 30 is also the same for both structured pattern and RGB image content.

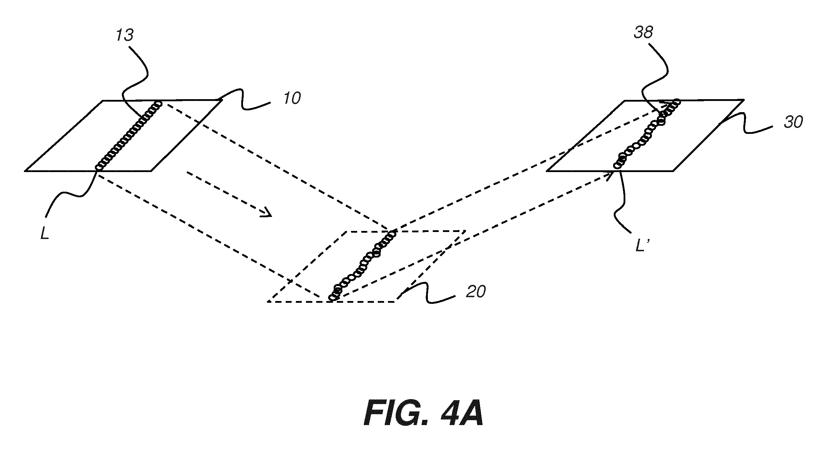

The schematic diagram of Figure 4A shows, with the example of a single line of light L, how patterned light from pattern generator 12 is used for obtaining surface contour information. A mapping is obtained as illumination array 10 directs a pattern of light onto surface 20 and a corresponding image of a line L' is formed on an imaging sensor array 30. Each pixel 38 of the projected pattern on imaging sensor array 30 maps to a corresponding pixel 13 on illumination array 10 according to modulation by surface 20. Shifts in pixel position, as represented in Figure 4A, yield useful information about the contour of surface 20. It can be appreciated that the basic pattern shown in Figure 4A can be implemented in a number of ways, using a variety of illumination sources and sequences and using one or more different types of sensor arrays 30.

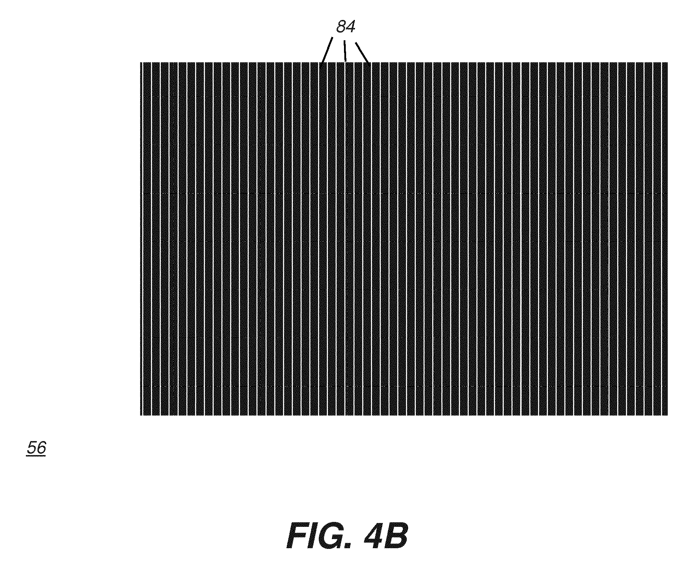

The plan view of Figure 4B shows one structured light pattern 56 having multiple lines of light 84 spaced apart from each other. According to an embodiment of the present invention, pattern 56 is directed to the tooth surface in a sequence or series of projected images in which lines 84 are incrementally shifted to the right or, alternately, to the left, in successive images of the projected series.

Illumination array 10 (Figure 3) can utilize any of a number of types of arrays used for light modulation, such as a liquid crystal array or digital micromirror array, such as that provided using the Digital Light Processor or DLP device from Texas Instruments, Dallas, TX. This type of spatial light modulator is used in the illumination path to change the light pattern as needed for the mapping sequence.

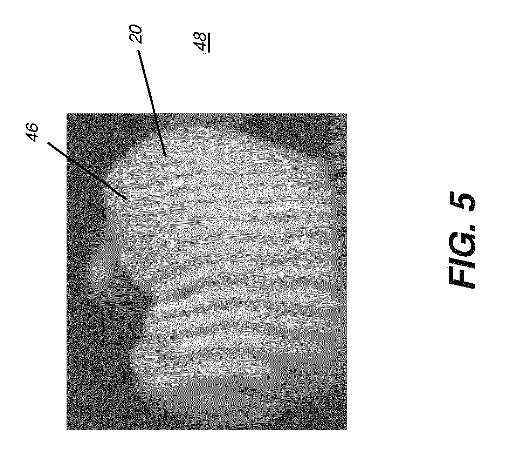

The plan view of Figure 5 shows a typical contour image 48 with projected pattern 46 on a tooth surface 20. As Figure 5 shows, contour lines can be indistinct on various parts of the surface. To help to compensate for this problem and reduce ambiguities and uncertainties in pattern detection, fringe pattern generator 12 (Figure 3) typically provides a sequence of patterned images, with the light and dark lines shifted to different positions as described with reference to Figure 4B and, alternately, having different line thicknesses or distances between lines of light. Various sequences and patterns can be used. U.S. Patent Application Nos. 13/293,308 and 13/525,590 entitled "3-D INTRAORAL MEASUREMENTS USING OPTICAL MULTILINE METHOD" (Milch), both incorporated herein in their entirety, describe at least one possible sequence that uses a series having multiple patterns, including patterns with multiple lines that are shifted with respect to each other, with the addition of obtaining flat field (all pixels illuminated) and dark field (no pixels illuminated) image data. It should be noted that a number of variations are possible for providing an ordered set of structured light patterns within the scope of the present invention. According to an embodiment of the present invention, the number of structured patterned images in the ordered set that is projected exceeds 20 images; sequences that use more than 20 images or fewer than 20 images could also be used.

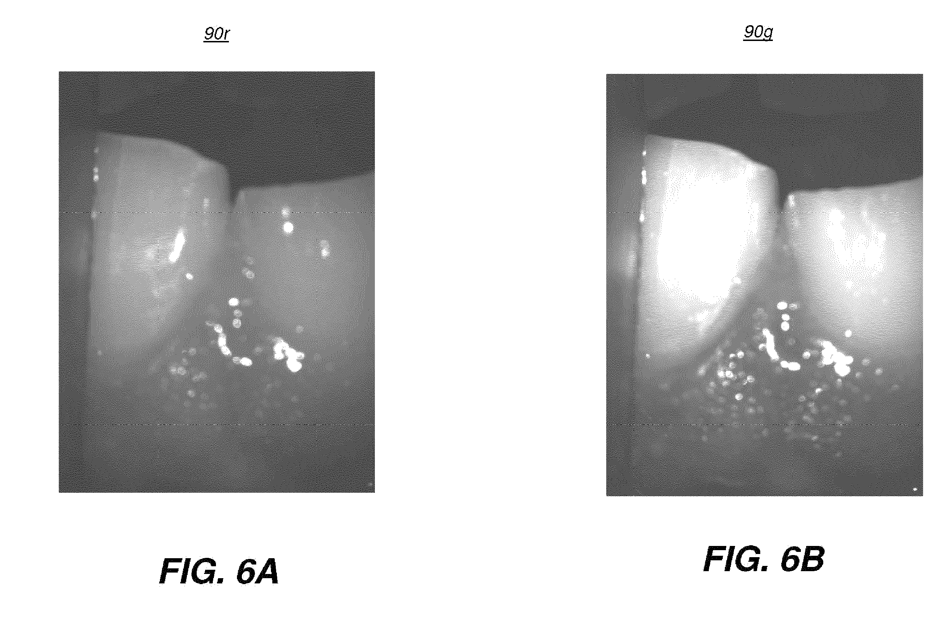

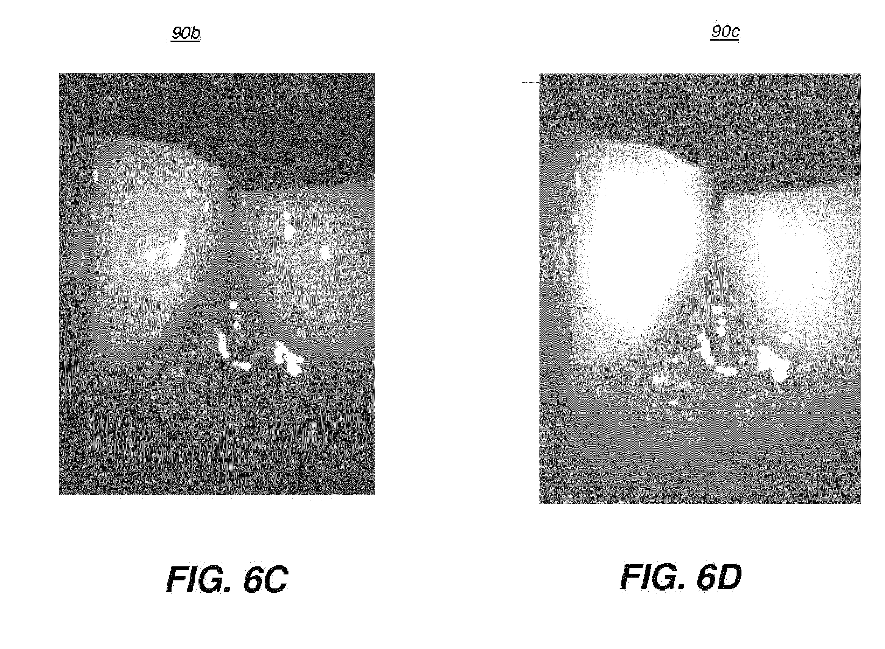

Calibration is provided for the image content, adjusting the obtained image data to generate accurate color for each image pixel. Figures 6A, 6B, and 6C show grayscale images 90r, 90g, and 90b of teeth obtained on monochrome sensor array 30 using red, green, and blue light from light sources 32r, 32g, and 32b (Figure 3) respectively. Figure 6D is a grayscale representation of a color image 90c formed by combining calibrated image data content for the red, green, and blue illumination. Color calibration is of particular value where a monochrome sensor is used to obtain color data and helps to compensate for inherent response characteristics of the sensor array for different wavelengths.

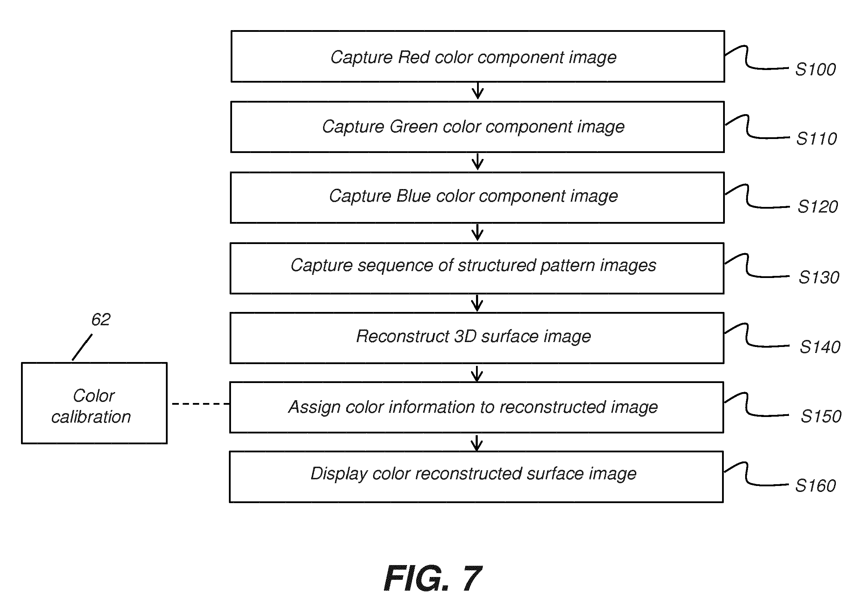

The logic flow diagram of Figure 7 shows steps in a process for forming a color surface contour image of one or more teeth in each view using the contour image data obtained as described with reference to Figures 2, 4, and 5, with the color image data obtained as described with reference to Figures 6A-6D. For each view position of the camera, three color component capture steps S100, S110, and S 120 acquire and record image data for the red, green, and blue color component images that are used to provide color data. In each of color component capture steps S100, S110, and S120, light of the corresponding spectral band is projected onto the teeth and the corresponding image information is acquired on monochrome sensor array 30 (Figure 3). This data is then recorded in memory, such as in memory 72 (Figure 1). A structured light imaging step S 130 also executes, in which the camera projects the structured light pattern onto the one or more teeth and records image data from the structured pattern on the monochrome sensor array 30. A surface reconstruction step S140 then executes, in which the surface contour image is generated according to the recorded image data from structured pattern projection in structured light imaging step S 130. This assigns depth information to the imaged pixels. A color assignment step S150 then assigns color information to the corresponding pixels, according to the recorded color data from color component capture steps S 100, S110, and S120 and according to color calibration data 62 that has been previously generated to account for optical characteristics of camera 40 and sensor array 30. The resulting surface contour image is then presented for viewing on a display monitor in a display step S160.

Color calibration can be performed before the execution of step S100 by capturing monochrome images of a color standard, or other calibration target, under illumination of red, green, and blue light from light sources 32r, 32g, and 32b (Figure 3), respectively, using processes familiar to those skilled in the imaging arts. Color calibration is a separate step, typically carried out during manufacturing to initialize camera 40, and may be periodically renewed as the camera is used. The result of the color calibration process is typically a 3x3 transformation matrix, but can also be a set of weighting factors or a look-up-table. The color calibration value or set of values, when multiplied with the pixel values of the images separately captured under RGB light, yields the RGB color image data values for that pixel. The color calibration matrix or table is stored in memory.

In step S 150, for each pixel in the view, the image values corresponding to the images captured in steps S100, S110, and S120 are multiplied by the color calibration matrix 62 to generate the color values in terms of RGB values. These RGB color values are associated with the spatial coordinate (x, y, z) values of the pixel from the surface contour image. Each pixel of the color 3-D image is thus represented by a set of six values {x, y, z, R, G, B}. After this color assignment step, the pixel has color content, whether it is displayed as part of a single view 3-D reconstruction or is incorporated into a larger 3-D structure that has been reconstructed from multiple views stitched together.

With respect to the logic flow shown in Figure 7, embodiments of the present invention operate by correlating and combining pixel color data obtained in steps S 100, S110, and S120 with pixel depth data obtained in steps S 130 and S 140 for camera 40 held in the same position. It can be appreciated that the processing performed in these steps can be executed continuously and in near-real time, so that the display of 3-D images of tooth surfaces in color can be performed at video rates as camera 40 is moved, provided that data acquisition and processing speeds are sufficient.

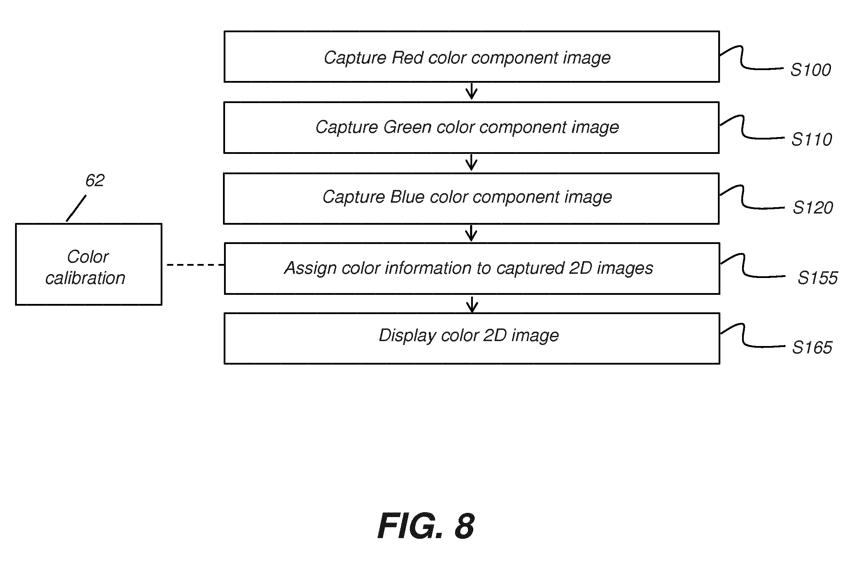

According to an alternative embodiment of the present invention, the workflow of Figure 8 can be carried out, either apart from or in addition to the workflow of Figure 7, to provide a two-dimensional (2-D) color image of the teeth. The logic flow diagram of Figure 8 shows a sequence of steps for obtaining 2-D color image data for display. Color component images are obtained in steps S 100, S110, and S120 and combined with color calibration data 62, as described previously with reference to Figure 7. In a color information assignment step S155, the color values that are generated are arranged as a 2-D image for display in a display step S165. The result is a color 2-D image that can be displayed as a color snapshot in step S165 and can be available for viewing almost immediately after the three sequential color component image captures are made. Display of the 2-D color snapshot may be desirable, for example, while 3-D reconstruction is being processed, helping to guide the practitioner through the imaging sequence. Or, if steps S 100 to S165 can be executed at sufficiently high speed, the display of 2-D color images of the teeth can be done continuously and at near-real time, providing live color preview.

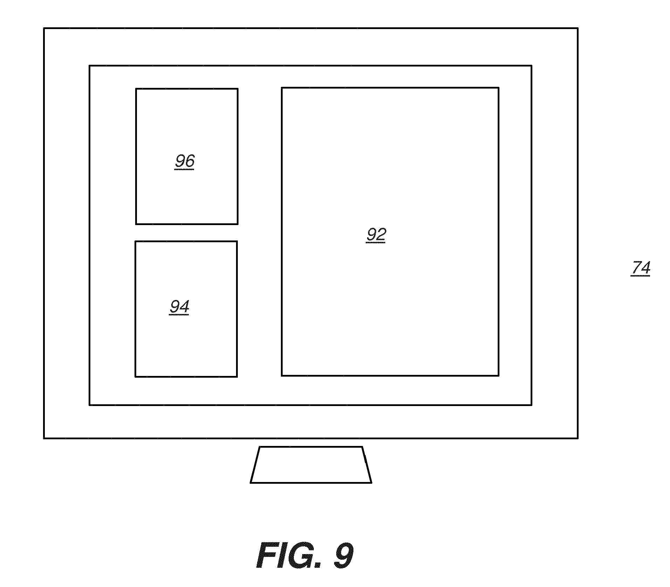

The plan view of Figure 9 shows a display of a 3-D surface image 92 and a color 2-D preview image 94 along with a monochrome 2-D image 96 on display 74. Using this arrangement, the practitioner can view color and/or monochrome 2-D images as a guide to positioning the camera for surface contour imaging. The monochrome and/or color 2-D images can be refreshed at video or near-video rates, such as at least about 10 - 20 times per second, for example. At data processing rates currently in use for intra-oral imaging apparatus, the surface contour image may not display at video rates; instead, providing the 2-D image content at higher refresh rates allows the 2-D images to help guide the practitioner more effectively and can compensate for some slight delay in providing the surface contour image. According to an alternate embodiment of the present invention, color preview image 94 is at reduced resolution, providing a thumbnail image for operator preview.

At least one described embodiment allows the color surface information to display at any suitable angle and are not dependent on color superimposition or other techniques used to provide some amount of simulated color content to the 3-D surface representation. Additionally, because depth information is available along with color information for each pixel in the image, the surface contour image content can be viewed from different perspectives, retaining its color content at each viewing angle.

According to an embodiment, structured pattern projection is performed using the blue light source 32b that is also used for obtaining the blue color component image data. Polarized blue light is used for structured light projection, by interposing polarizer 14 and analyzer 28 in the illumination and imaging light paths, respectively.

Light intensity for each image can be the same; however, there can be advantages to changing intensity of the projected light for acquiring images of different types. Suitable adjustment of intensity can help to reduce the impact of scattered light, for example. According to an embodiment of the present invention, structured pattern images are projected at different intensities depending on line thickness and other factors, while color component image capture is obtained by projecting light at full intensity.

It is noted that the image capture steps S 100, S110, S120, and S 130 described with reference to Figure 7 can be executed/performed in any suitable order. For example, it may be convenient to capture the component color content (steps S100, S110, S120) after capturing the sequence of structured pattern images in structured light imaging step S 130. The structured pattern images can be acquired in any order.

Consistent with an embodiment of the present invention, a computer executes a program with stored instructions that perform on image data accessed from an electronic memory. As can be appreciated by those skilled in the image processing arts, a computer program of an embodiment of the present invention can be utilized by a suitable, general-purpose computer system, such as a personal computer or workstation, as well as by a microprocessor or other dedicated processor or programmable logic device. However, many other types of computer systems can be used to execute the computer program of the present invention, including networked processors. The computer program for performing the method of the present invention may be stored in a computer readable storage medium. This medium may comprise, for example; magnetic storage media such as a magnetic disk (such as a hard drive) or magnetic tape or other portable type of magnetic disk; optical storage media such as an optical disc, optical tape, or machine readable bar code; solid state electronic storage devices such as random access memory (RAM), or read only memory (ROM); or any other physical device or medium employed to store a computer program. The computer program for performing the method of the present invention may also be stored on computer readable storage medium that is connected to the image processor by way of the internet or other communication medium. Those skilled in the art will readily recognize that the equivalent of such a computer program product may also be constructed in hardware.

It will be understood that the computer program product of the present invention may make use of various image manipulation algorithms and processes that are well known. It will be further understood that the computer program product embodiment of the present invention may embody algorithms and processes not specifically shown or described herein that are useful for implementation. Such algorithms and processes may include conventional utilities that are within the ordinary skill of the image processing arts. Additional aspects of such algorithms and systems, and hardware and/or software for producing and otherwise processing the images or co-operating with the computer program product of the present invention, are not specifically shown or described herein and may be selected from such algorithms, systems, hardware, components and elements known in the art.

In the context of the present disclosure, the act of "recording" images means storing image data in some type of memory circuit in order to use this image data for subsequent processing. The recorded image data itself may be stored more permanently or discarded once it is no longer needed for further processing.

It is noted that the term "memory", equivalent to "computer-accessible memory" in the context of the present disclosure, can refer to any type of temporary or more enduring data storage workspace used for storing and operating upon image data and accessible to a computer system. The memory could be non-volatile, using, for example, a long-term storage medium such as magnetic or optical storage. Alternately, the memory could be of a more volatile nature, using an electronic circuit, such as random-access memory (RAM) that is used as a temporary buffer or workspace by a microprocessor or other control logic processor device. Display data, for example, is typically stored in a temporary storage buffer that is directly associated with a display device and is periodically refreshed as needed in order to provide displayed data. This temporary storage buffer can also be considered to be a memory, as the term is used in the present disclosure. Memory is also used as the data workspace for executing and storing intermediate and final results of calculations and other processing. Computer-accessible memory can be volatile, non-volatile, or a hybrid combination of volatile and non-volatile types. Computer-accessible memory of various types is provided on different components throughout the system for storing, processing, transferring, and displaying data, and for other functions.

The invention has been described in detail with particular reference to a presently preferred embodiment, but it will be understood that variations and modifications can be effected within the spirit and scope of the invention. The presently disclosed embodiments are therefore considered in all respects to be illustrative and not restrictive. The scope of the invention is indicated by the appended claims, and all changes that come within the meaning and range of equivalents thereof are intended to be embraced therein.

## Claims

1. A method for forming a color surface contour image of one or more teeth, comprising:
for each of a plurality of structured patterns, projecting the structured pattern onto the one or more teeth and recording image data from the structured pattern onto a monochrome sensor array;
generating surface contour image data according to the recorded image data from the structured pattern projection;
projecting light of a first spectral band onto the one or more teeth and recording a first color component image data on the monochrome sensor array;
projecting light of a second spectral band onto the one or more teeth and recording a second color component image data on the monochrome sensor array;
projecting light of a third spectral band onto the one or more teeth and recording a third color component image data on the monochrome sensor array;
combining the recorded first, second, and third color component image data for each image pixel with color calibration data to generate a set of color values for the pixel and assigning the generated set of color values to the corresponding pixel in the generated surface contour image data to generate the color surface contour image; and
displaying at least a portion of the generated color surface contour image.

2. The method of claim 1 wherein the plurality of structured patterns include shifted versions of a pattern having multiple lines of light.

3. The method of claim 1 wherein projecting the structured pattern comprises energizing a digital micromirror array.

4. The method of claim 1 wherein projecting the structured pattern comprises energizing a liquid crystal device.

5. The method of claim 1 further comprising projecting the structured pattern at a first power level and projecting the light of the first spectral band at a second power level that differs from the first power level.

6. The method of claim 1 wherein the color calibration data comprises a plurality of weighting factors.

7. The method of claim 1 wherein the color calibration data is a matrix.

8. The method of claim 1 wherein the step of combining consists of a multiplication operation.

9. The method of claim 1 further comprising generating a color 2-D image of the one or more teeth.

10. The method of claim 9 further comprising displaying the generated color 2-D image.

11. The method of claim 9 further comprising displaying the generated color 2-D image along with the generated color surface contour image.

12. The method of claim 1 wherein projecting the structured pattern comprises projecting polarized light of the first spectral band onto the one or more teeth.

13. The method of claim 12 wherein projecting light of the first spectral band onto the one or more teeth and recording first color component image data comprises projecting non-polarized light.

14. A method for forming a color 2-D image of one or more teeth, comprising:
projecting light of a first spectral band onto the one or more teeth and recording a first color component image data on a monochrome sensor array;
projecting light of a second spectral band onto the one or more teeth and recording a second color component image data on the monochrome sensor array;
projecting light of a third spectral band onto the one or more teeth and recording a third color component image data on the monochrome sensor array;
combining the recorded first, second, and third color component image data for each pixel and color calibration data for the monochrome sensor array to generate color values;
assigning the generated color values to corresponding pixels in the recorded first, second, and third color component image data to generate a color 2-D image of the one or more teeth; and
displaying at least a portion of the generated color 2-D image.

15. The method of claim 14 wherein the steps of generating the color 2-D image of the one or more teeth and displaying the generated color 2-D image are executed at least ten times per second.
